## Europäisches Patentamt

## European Patent Office

## Office européen des brevets

(19)

(11) Veröffentlichungsnummer: **0 175 088**
**B1**

(12) # EUROPÄISCHE PATENTSCHRIFT

(45) Veröffentlichungstag der Patentschrift:
27.04.88

(51) Int. Cl.⁴: **B 23 B 31/04**

(21) Anmeldenummer: **85109106.6**

(22) Anmeldetag: **20.07.85**

(54) Werkzeughalter für Bohr- und Meisselwerkzeuge.

(30) Priorität: **17.09.84 DE 3434076**

(43) Veröffentlichungstag der Anmeldung:
**26.03.86 Patentblatt 86/13**

(45) Bekanntmachung des Hinweises auf die Patenterteilung:
**27.04.88 Patentblatt 88/17**

(84) Benannte Vertragsstaaten:
**AT BE CH DE FR GB IT LI NL SE**

(56) Entgegenhaltungen:
**DD-A-120 603**
**DE-A-2 056 090**
**DE-A-2 354 168**
**US-A-2 612 377**
**US-A-3 533 638**
**US-A-4 002 347**

(73) Patentinhaber: **HILTI Aktiengesellschaft, FL- 9494 Schaan (LI)**

(72) Erfinder: **Deutschenbaur, Paul, Dianastrasse 10, D-8034 Germering (DE)**
Erfinder: **Rupprecht, Hans, Ettalstrasse 24, D-8000 München 70 (DE)**
Erfinder: **Burtscher, Norbert, Werksstrasse 262, A-6712 Thüringen (AT)**
Erfinder: **Nigg, Berno, Badälstrasse 201, FL- 9487 Gamprin (LI)**

(74) Vertreter: **Wildi, Roland, Hilti Aktiengesellschaft Patentabteilung, FL- 9490 Schaan (LI)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

## Beschreibung

Die Erfindung betrifft einen Werkzeughalter und ein Bohr- und Meisselwerkzeug, wobei der Werkzeughalter eine Aufnahmehülse mit Aufnahmeöffnung für den Einsteckschaft des Werkzeugs sowie in die Aufnahmeöffnung unter Federkraft einrückbare Verriegelungselemente aufweist und die Aufnahmeöffnung und der Einsteckschaft in Einführrichtung des Werkzeugs kegelig verjüngt ausgebildet sind, und der Einsteckschaft mit einer Ringnut mit zur Werkzeugachse geneigter einführrichtungsseitiger Flanke zum Eingriff der Verriegelungselemente versehen ist, und ein von einem Federelement beaufschlagtes Betätigungselement für die Verriegelungselemente vorgesehen ist.

Ein bekannter Werkzeughalter (DE-A-3 205 063) zum Festlegen von Bohr- und Meisselwerkzeugen weist eine Aufnahmehülse mit zylindrischer Aufnahmeöffnung für den korrespondierend zylindrischen Einsteckschaft der Werkzeuge auf. Zur Drehmitnahme sind an der Aufnahmehülse Mitnehmerleisten vorgesehen, die in Nuten am Einsteckschaft einragen. Ferner weist der Werkzeughalter als Kugeln ausgebildete Verriegelungselemente auf, die zur axialen Sicherung der Werkzeuge im Werkzeughalter in weitere Ausnehmungen am Einsteckschaft eingerückt werden.

Dieser bekannte Werkzeughalter ist zum Einsatz in an die Werkzeuge Schlage abgebende Geräte, wie beispielsweise Bohrhämmer, vorgesehen. Die in den Werkzeughalter eingesetzten Werkzeuge sind deshalb begrenzt axial verschiebbar gelagert. Aufgrund dieser Verschiebbarkeit und des dadurch entstehenden Verschleisses ist ein gewisses radiales Spiel nicht zu vermeiden, was zu einer begrenzten radialen Bewegungsfreiheit der Werkzeuge führt. Für das Erstellen punktgenauer und im Durchmesser präziser Bohrungen ist dieser Werkzeughalter demnach nicht geeignet.

Auch bei einer weiters bekannten (DE-A-2 354 168) Anordnung mit tangential zur Aufnahmeöffnung angeordneten, radial verschiebbaren Stiften zur axialen Sicherung der Werkzeuge besteht das Problem unzureichender radialer Führung der Werkzeuge.

Bekannt ist ferner ein Werkzeughalter (US-A-2 612 377) mit kegeliger Aufnahmeöffnung für ein Werkzeug mit kegeligem Einsteckschaft. Der axialen Halterung des Werkzeugs im Werkzeughalter dienen Stifte, die durch Verdrehen des Werkzeuges gegenüber dem Werkzeughalter in bestimmter Drehstellung in Ausnehmungen am Werkzeug eingreifen. Nachteil ist bei diesem Werkzeughalter die umständliche Handhabung, insbesondere im Hinblick auf die Verschmutzung und Erwärmung des Werkzeugs.

Bei einem weiteren Werkzeughalter (DE-A-2 056 090) mit kegeliger Aufnahmeöffnung für ein Werkzeug mit kegeligem Einsteckschaft weist die Stirnseite des Einsteckschaftes eine Quernut auf, in die zur Drehmitnahme ein Stift eingreift. Auch hier kann das Werkzeug nur in bestimmter Drehstellung mit dem Werkzeughalter verbunden werden, so dass wiederum Nachteile hinsichtlich der Handhabung in Kauf genommen werden müssen. Diese Übertragung von Drehmomenten ist zudem verschleissanfällig. Letzteres trifft auch für die axiale Halterung des Werkzeugs mittels Kugeln zu.

Der Erfindung liegt die Aufgabe zugrunde, einen einfachen handhabbaren Werkzeughalter zu schaffen, der sich durch exakte zentrische Führung der Werkzeuge auszeichnet.

Erfindungsgemäss wird die Aufgabe dadurch gelöst, dass in der Aufnahmeöffnung achsparallele Mitnehmerleisten für Nuten des Einsteckschaftes vorgesehen sind, die Verriegelungselemente als in Radialschlitzen tangential zur Aufnahmeöffnung angeordnete, im wesentlichen radial verschiebbare Stifte ausgebildet sind.

Durch die kegelige Aufnahmeöffnung werden die Werkzeuge beim Einschieben von der Wandung der Aufnahmeöffnung unter Abstützung automatisch spielfrei zentriert. Die so erzielte Anlage des Einsteckschaftes schafft zugleich eine Dichtung, wie sie beispielsweise für Arbeiten mit hohlen Diamantbohrkronen für die Zuleitung von Spülflüssigkeit durch den Werkzeughalter von Vorteil ist. Die Drehmitnahme der Werkzeuge erfolgt über Mitnehmerleisten am Werkzeughalter, die in werkzeugsseitigen Nuten eingreifen. Durch entsprechende unterschiedliche Formgebung der Mitnehmerleisten lassen sich, beispielsweise für bestimmte Durchmesserbereiche der Werkzeuge oder andere Kriterien, Codierungen schaffen. Die axiale Halterung der Werkzeuge erfolgt durch tangential zur Aufnahmeöffnung angeordnete, radial verschiebbare Stifte, die in entsprechende Ausnehmungen der Werkzeuge einrücken.

Im Vergleich zu kugelförmigen Verriegelungselementen zeichnen sich Stifte durch besseres Verschleissverhalten und demzufolge störungsfreie Funktion aus. Die Stifte halten durch Federkraft die Werkzeuge in stetiger Anlage mit der Wandung der kegeligen Aufnahmeöffnung.

Zur Erleichterung des Werkzeugwechsels liegt der Kegelwinkel der Aufnahmeöffnung ausserhalb der Selbsthemmung. Mit Vorteil beträgt der Kegelwinkel der Aufnahmeöffnung 20 bis 30°, vorzugsweise 25°.

Eine einfach herstellbare, durch problemlose Funktion gekennzeichnete Lagerung der Stifte wird nach einem weiteren Vorschlag durch tangential angeordnete Radialschlitze erzielt. In Weiterbildung der Erfindung laufen die Radialschlitze, zur Achse der Aufnahmehülse unter einem Winkel von 30 bis 60° geneigt, entgegen der Einführrichtung der Werkzeuge aufeinander zu. Durch diese Anordnung der Radialschlitze lassen sich die Stifte in einfacher Weise, dh durch Kraftangriff in Richtung längs der Achse des Werkzeughalters, ein- bzw ausrücken.

Nach einer bevorzugten Ausführungsform ist ein von einem Federelement beaufschlagtes Betätigungsorgan für die Stifte vorgesehen. Einfachheitshalber ist das Betätigungsorgan als die Aufnahmehülse umschliessende Ringscheibe ausgebildet, die sich an den die Aufnahmehülse mantelseitig überragenden Endabschnitten der Stifte abstützt. Die Stifte werden so in Einrückstellung getrieben. Für das Ausrücken der Stifte kann ebenso eine Ringscheibe vorgesehen sein, die gegenüberliegend zum Betätigungsorgan an den überstehenden Endabschnitten der Stifte angreift. Durch Verschieben dieser Ringscheibe entgegen der Kraft des Federelementes werden die Stifte ausgerückt. Dieses Verschieben erfolgt zweckmässig durch eine die Aufnahmehülse in radialem Abstand umschliessende verschiebbare Betätigungsmanschette.

Gemäss einem weiteren Vorschlag der Erfindung ist der Einsteckschaft der für den erläuterten Werkzeughalter vorgesehenen Werkzeuge in Einführrichtung kegelig verjüngt, mit einem Kegelwinkel von 20 bis 30°, ausgebildet. Das Zusammenwirken der beiden Kegelwinkel von Aufnahmeöffnung und Einsteckschaft führt nicht zu einem Verklemmen, da die Kegelwinkel ausserhalb der Selbsthemmung liegen. Die korrespondierende Ausbildung des Kegelwinkels des Einsteckschaftes mit jenem der Aufnahmeöffnung gewährleistet eine grosse Kontaktfläche zwischen Einsteckschaft und Aufnahmeöffnung, was zu hoher Dichtigkeit führt.

Insbesondere aufgrund von Herstellungsvorteilen sind die Ausnehmungen für die Verriegelungselemente vorzugsweise von einer Ringnut gebildet.

Vorzugsweise ist die einführrichtungsseitige Flanke der Ringnut unter einem Winkel von 20 bis 40° zur Werkzeugachse geneigt und die gegenüberliegende Flanke verläuft rechtwinklig zur Werkzeugachse. Die Stifte liegen bei eingesetztem Einsteckschaft unter Angriff an der einführrichtungsseitigen Flanke in der Ringnut und halten so den Einsteckschaft in stetigem Berührungskontakt mit der Wandung der Aufnahmeöffnung. Ein Herausziehen des Werkzeugs aus dem Werkzeughalter wird aufgrund der voran aufgezeigten Neigungsverhältnisse zwischen den Radialschlitzen und der einführrichtungsseitig verlaufenden Flanke der Ringnut durch die Stifte unterbunden. Erst durch Verschieben bzw. Ausrücken der Stifte durch Zurückziehen der Betätigungsmanschette wird das Werkzeug zur Entnahme freigegeben.

Die Erfindung wird nachstehend anhand einer Zeichnung, die ein Ausführungsbeispiel wiedergibt, näher erläutert. Es zeigen:

Fig. 1 einen Werkzeughalter im Längsschnitt;

Fig. 2 eine Ansicht des Werkzeughalters nach Fig. 1 in Einführrichtung;

Fig. 3 die Abtriebsspindel eines Antriebsgerätes;

Fig. 4 ein Werkzeug für den Einsatz im Werkzeughalter nach Fig. 1.

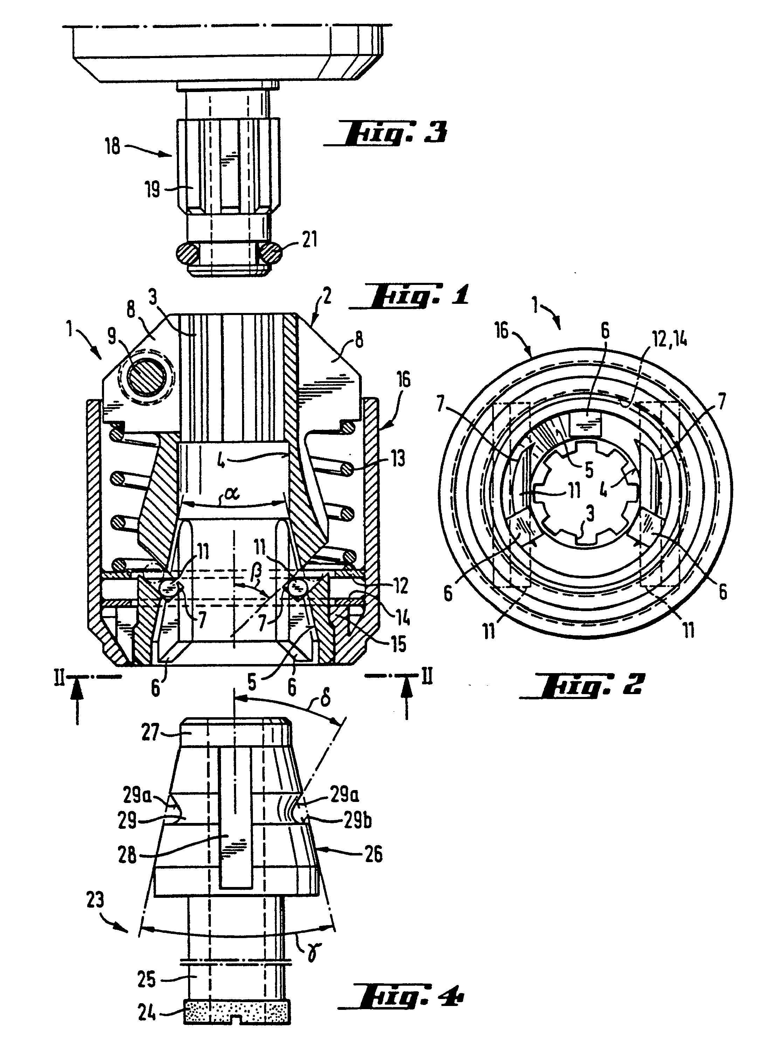

Der insgesamt mit 1 bezeichnete Werkzeughalter weist eine insgesamt mit 2 bezeichnete Aufnahmehülse auf. Deren Durchgangsbohrung ist im hinteren Abschnitt mit einer Keilwellenverzahnung 3 versehen, an die vorderseitig ein zylindrischer Bohrungsabschnitt 4 und an diesen eine kegelige Aufnahmeöffnung 5 mit einem Kegelwinkel α von 25° anschliesst. Entlang der Aufnahmeöffnung 5 erstrecken sich drei (Fig. 2) Mitnehmerleisten 6, die entlang des Umfangs der Aufnahmeöffnung 5 zueinander in gleichem Winkelabstand stehen. In die Aufnahmeöffnung 5 münden tangential zu dieser angeordnete Radialschlitze 7, die zur Aussenkontur der Aufnahmehülse 2 hin offen sind. Die Radialschlitze 7 laufen unter einem Winkel β von 45° gegenüber der Achse der Aufnahmehülse 2 geneigt aufeinander zu. In dem die Keilwellenverzahnung 3 aufweisenden hinteren Abschnitt weist die Aufnahmehülse 2 eine Längsschlitzung 8 auf, die der Aufnahmehülse hinterseitig eine Elastizität verleiht. Mittels einer Spannschraube 9 kann so die Aufnahmehülse 2 und damit der Werkzeughalter 1 auf einer Abtriebsspindel eines Antriebsgerätes festgespannt werden.

In den Radialschlitzen 7 sitzen Verriegelungselemente in Form von Stiften 11. Die Stifte 11 überragen mit deren Endabschnitten die Mantelkontur der Aufnahmehülse 2. Auf diesen Endabschnitten stützt sich ein ringförmiges Betätigungselement 12 ab. Dieses wird von einem Federelement 13 in Berührungskontakt mit den Stiften 11 gehalten.

Auf der dem Betätigungselement 12 gegenüberliegenden Seite der Stifte 11 ist ferner eine Ringscheibe 14 verschieblich gelagert. In der in Fig. 1 gezeigten Ruhestellung des Werkzeughalters 1 liegt die Ringscheibe 14 an einem Stützrand 15 einer insgesamt mit 16 bezeichneten Betätigungsmanschette auf. Letztere ist gegenüber der Aufnahmehülse 2 verschiebbar.

Die Fig. 2 verdeutlicht die Anordnung der Mitnehmerleisten 6 in der Aufnahmehülse 2. Ferner ist angedeutet, wie die Stifte 11 die Mantelkontur der Aufnahmehülse 2 überragen.

Der Fig. 3 ist eine insgesamt mit 18 bezeichnete Abtriebsspindel eines Antriebsgerätes entnehmbar. Die Abtriebsspindel 18 weist zur Drehmitnahme des Werkzeughalters 1 eine korrespondierende Keilwellenverzahnung 19 auf. Ferner ist im vorderen Endbereich der Abtriebsspindel 18 ein elastischer Dichtring 21 angeordnet.

Zum Verbinden des Werkzeughalters 1 mit der Abtriebsspindel 18 wird ersterer auf die Abtriebsspindel aufgeschoben, so dass der Dichtring 21 in den zylindrischen Bohrungsabschnitt 4 einrastet. Die Keilwellenverzahnungen 3, 19 von Aufnahmehülse 2 und Abtriebsspindel 18 schaffen eine drehschlüssige Verbindung zwischen diesen Teilen. Durch Festziehen der Spannschraube 9 wird auch eine zuverlässige axiale Fixierung zwischen den Teilen erreicht.

In Fig. 4 ist ein insgesamt mit 23 bezeichnetes Werkzeug in Form eines Hohlbohrers gezeigt. Vorderseitig ist das Werkzeug 23 mit einem Diamantkörner aufweisenden Bohrkopf 24 versehen. An einen verkürzt dargestellten Schaft 25 schliesst sich hinterseitig ein insgesamt mit 26 bezeichneter Einsteckschaft an. Dieser überragt im Durchmesser den Schaft 25 und weist im wesentlichen eine mit der Aufnahmeöffnung 5 korrespondierende kegelige Kontur mit einem Kegelwinkel γ von 25° auf. Ein zylindrischer freier Endabschnitt 27 des Einsteckschaftes 26 korrespondiert im Durchmesser mit dem Bohrungsabschnitt 4 in der Aufnahmehülse 2. Entlang der kegeligen Kontur des Einsteckschaftes 26 verlaufen achsparallel, gleichmässig über den Umfang verteilt, drei Nuten 28 zum formschlüssigen Eingriff der Mitnehmerleisten 6. Ferner ist im Bereich der kegeligen Kontur des Einsteckschaftes 26 eine Ringnut 29 vorgesehen. Deren Grund wird durch eine einführrichtungsseitige Flanke 29a und eine dieser gegenüberliegende Flanke 29b gebildet. Die Flanke 29a ist unter einem Winkel δ von 30° zur Werkzeugachse geneigt, während die gegenüberliegende Flanke 29b rechtwinkelig zur Werkzeugachse verläuft.

Zum Einsetzen des Werkzeuges 23 in den Werkzeughalter 1 wird das Werkzeug gegen das vordere Ende der Mitnehmerleisten 6 geführt. Durch Drehen gelangen die werkzeugseitigen Nuten 28 in Deckung mit den Mitnehmerleisten 6, worauf sich das Werkzeug 23 mit dem Einsteckschaft 26 bis zum Auflaufen dessen Kegelkontur an der Wandung der kegeligen Aufnahmeöffnung 5 einschieben lässt. Während dieses Einschiebens drängt die Kegelkontur des Einsteckschaftes 26 die Stifte 11 in den Radialschlitzen 7 entgegen der Federkraft vorerst nach aussen. Gegen Ende der Einschiebebewegung gelangt die Ringnut 29 in den Bereich der Radialschlitze 7, so dass die Stifte 11 vom Federelement 13 bzw. vom Betätigungselement 12 in die Ringnut eingerückt werden. Die Stifte 11 legen sich dabei gegen die einführrichtungsseitige Flanke 29a an und bewirken eine Kraftkomponente, die eine selbsttätige Anlage der kegeligen Kontur des Einsteckschaftes 26 an der kegeligen Wandung der Aufnahmeöffnung 5 gewährleistet.

Zum Entfernen des Werkzeuges 23 wird die Betätigungsmanschette 16 händisch nach hinten verschoben. Die mit laufende Ringscheibe 14 verschiebt dabei die Stifte 11 entlang der Radialschlitze 7 nach aussen und damit aus der Ringnut 29. Das Werkzeug 23 lässt sich nun ohne nennenswerten Kraftaufwand aus dem Werkzeughalter 1 ziehen.

## Patentansprüche

1. Werkzeughalter (1) und Bohr- bzw. Meisselwerkzeug (23), wobei der Werkzeughalter (1) eine Aufnahmehülse (2) mit Aufnahmeöffnung (5) für den Einsteckschaft (26) des Werkzeugs (23) sowie in die Aufnahmeöffnung (5) unter Federkraft einrückbare Verriegelungselemente aufweist und die Aufnahmeöffnung (5) und der Einsteckschaft (26) in Einführrichtung des Werkzeugs (23) kegelig verjüngt ausgebildet sind, und der Einsteckschaft (26) mit einer Ringnut (29) mit zur Werkzeugachse geneigter einführrichtungssei-tiger Flanke (29a) zum Eingriff der Verriegelungselemente versehen ist, und ein von einem Federelement (13) beaufschlagtes Betätigungselement (12), für die Verriegelungselemente (11) vorgesehen ist, dadurch gekennzeichnet, dass in der Aufnahmeöffnung (5) achsparallele Mitnehmerleisten (6) für Nuten (28) des Einsteckschaftes (26) vorgesehen sind, und dass die Verriegelungselemente als in Radialschlitzen (7) tangential zur Aufnahmeöffnung (5) angeordnete, im wesentlichen radial verschiebbare Stifte (11) ausgebildet sind.

2. Werkzeughalter nach Anspruch 1, dadurch gekennzeichnet, dass die Radialschlitze (7), zur Achse der Aufnahmehülse (2) unter einem Winkel (β) von 30 bis 60° geneigt, entgegen der Einführrichtung des Werkzeugs (23) aufeinander zulaufen.

3. Werkzeug nach Anspruch 1, dadurch gekennzeichnet, dass die einführrichtungsseitige Flanke (29a) der Ringnut (29) unter einem Winkel (δ) von 20 bis 40° zur Werkzeugachse geneigt ist.

## Claims

1. A tool holder (1) and drilling or chiselling tool (23) respectively, in which respect the tool holder (1) comprises a reception sleeve (2) having a reception aperture (5) for the plug-in shank (26) of the tool (23) as well as locking elements which are engageable under spring force into the reception aperture (5) and the reception aperture (5) and the plug-in shank (26) are designed conically tapered in the insertion direction of the tool (23), and the plug-in shank (26) is provided with an annular groove (29) having a flank (29a), on the insertion direction side and inclined to the tool axis, for the engagement of the locking elements, and there is provided an actuating element (12) for the locking elements (11) which is acted upon by a spring element (13), characterised in that axially-parallel entrainment ledges (6) for grooves (28) of the plug-in shaft (26) are provided in the reception aperture (5), and in that the locking elements are designed as substantially radially displaceable pins (11) which are arranged in radial slots (7) tangentially to the reception aperture (5).

2. A tool holder according to claim 1, characterised in that the radial slots (7), inclined at an angle (β) of 30 to 60° to the axis of the reception sleeve (2), extend towards one another contrary to the insertion direction of the tool (23).

3. A tool according to claim 1, characterised in that the flank (29a), on the insertion direction side, of the annular groove (29) is inclined at an angle (δ) of 20 to 40° to the tool axis.

## Revendications

1. Porte-outil (1) et outil de perçage et de burinage (23), le porte-outil (1) comprenant une douille de réception (2) avec une ouverture de réception (5) pour la tige d'emmanchement (26) de l'outil (23) ainsi que des organes de verrouillage pouvant être engagés dans l'ouverture de réception (5) sous l'action de la force d'un ressort; l'ouverture de réception (5) et la tige d'emmanchement (26) présentant une forme en cône dans le sens de l'introduction de l'outil (23); la tige d'emmanchement (26) étant munie d'une rainure annulaire (29) avec un flanc (29a) incliné, du côté introduction, vers l'axe de l'outil pour l'engagement des organes de verrouillage et un organe de manoeuvre (12) commandé par un élément élastique (13) étant prévu pour les organes de verrouillage (11), <u>caractérisé en ce</u> que des nervures d'entraînement (6) parallèles à l'axe sont prévues dans l'ouverture de réception (5) pour des rainures (28) de la tige d'emmanchement (26), et que les organes de verrouillage sont conformés en chevilles (11) disposées dans des fentes radiales (7), tangentiellement par rapport à l'ouverture de réception (5) et pouvant être déplacées sensiblement dans le sens radial.

2. Porte-outil selon la revendication 1, caractérisé en ce que les fentes radiales (7), inclinées par rapport à l'axe de la douille de réception (2) sous un angle ($\beta$) de 30 à 60°, convergent en sens inverse de la direction d'engagement de l'outil (23).

3. Porte-outil selon la revendication 1, caractérisé en ce que le flanc (29a) de la rainure annulaire (29) situé du côté introduction est incliné sous un angle ($\delta$) de 20 à 40° par rapport à l'axe de l'outil.

*Fig. 3*

*Fig. 1*

*Fig. 2*

*Fig. 4*